# EUROPÄISCHE PATENTSCHRIFT

(11) **EP 3 186 511 B1**
(45) Veröffentlichungstag und Bekanntmachung des Hinweises auf die Patenterteilung: **16.05.2018**
(21) Anmeldenummer: 15754240.8
(22) Anmeldetag: 27.08.2015
(51) Int. Cl.: F04C 5/00, F04B 43/12, F04C 15/00

(54) **PUMPE ZUR FÖRDERUNG EINER FLÜSSIGKEIT, INSBESONDERE ZUR FÖRDERUNG EINES ABGASREINIGUNGSADDITIVS**
PUMP FOR CONVEYING A FLUID, IN PARTICULAR FOR CONVEYING AN EXHAUST GAS CLEANING ADDITIVE
POMPE DE TRANSPORT DE LIQUIDE, EN PARTICULIER DE TRANSPORT D'UN ADDITIF DE NETTOYAGE DE GAZ D'ÉCHAPPEMENT

(30) Priorität: 28.08.2014 DE 102014112390
(43) Veröffentlichungstag der Anmeldung: 05.07.2017
(73) Patentinhaber: Continental Automotive GmbH, 30165 Hannover (DE)
(72) Erfinder: HODGSON, Jan, 53840 Troisdorf (DE); KOPP, Yves, F-57510 Remering-les-Puttelange (FR); MAGUIN, Georges, F-57155 Marly (FR)
(86) Internationale Anmeldenummer: PCT/EP2015/069608
(87) Internationale Veröffentlichungsnummer: WO 2016/030446

(56) Entgegenhaltungen:
- EP-A1- 2 636 862
- DE-A1- 2 853 916
- DE-B3-102011 015 110
- GB-A- 768 253

## Beschreibung

Die Erfindung betrifft eine Pumpe zur Förderung einer Flüssigkeit, die insbesondere dazu geeignet ist, ein flüssiges Abgasreinigungsadditiv (wie beispielsweise Harnstoff-Wasser-Lösung) in eine Abgasbehandlungsvorrichtung zur Reinigung der Abgase von Verbrennungskraftmaschinen zu fördern.

Abgasbehandlungsvorrichtungen, in denen ein flüssiges Additiv zur Abgasreinigung einsetzt wird, sind beispielsweise im Kraftfahrzeugbereich weit verbreitet. Ein flüssiges Additiv wird in Abgasbehandlungsvorrichtungen insbesondere eingesetzt, um Stickstoffoxidverbindungen aus dem Abgas zu entfernen. In derartigen Abgasbehandlungsvorrichtungen wird das sogenannte SCR-Verfahren durchgeführt (SCR = Selective Catalytic Reduction) . Bei den SCR-Verfahren werden Stickstoffoxidverbindungen im Abgas mit einem Reduktionsmittel (normalerweise Ammoniak) reduziert. Das Ammoniak wird im Kraftfahrzeug üblicherweise nicht in Reinform bevorratet, sondern in Form eines flüssigen (Abgas-)additivs, welches abgasextern (in einem dafür vorgesehenen externen Reaktor) und/oder abgasintern (in der Abgasbehandlungsvorrichtung) zu Ammoniak umgesetzt wird. Als flüssiges Additiv wird in diesem Zusammenhang bevorzugt Harnstoff-Wasser-Lösung verwendet. Eine Harnstoff-Wasser-Lösung mit einem Harnstoffgehalt von 32,5 % ist unter dem Handelsnamen AdBlue® erhältlich.

Das flüssige Additiv wird im Kraftfahrzeug üblicherweise in einem Tank gespeichert und mittels einer Fördereinheit der Abgasbehandlungsvorrichtung zugegeben. Eine Fördereinheit hat üblicherweise auch mindestens eine Pumpe. Weiterhin kann eine Fördereinheit unter anderem auch folgende Komponenten aufweisen: Filter, Sensor, Ventil und/oder Dosiereinheit.

Problematisch bei einer Fördereinheit für flüssiges Additiv ist, dass dieses bei niedrigen Temperaturen einfrieren kann. Eine 32, 5 %ige Harnstoff-Wasser-Lösung friert beispielsweise bei -11 °C ein. Derartig niedrige Temperaturen können bei Kraftfahrzeugen insbesondere während langer Stillstandsphasen im Winter auftreten. Beim Einfrieren des Additivs tritt eine Volumenvergrößerung auf, die die Leitungen, Kanäle und/oder Komponenten des Fördermoduls beschädigen oder sogar zerstören kann. Das Einfrieren ist insbesondere für eine Pumpe problematisch, weil eine Pumpe in intensivem Kontakt mit dem flüssigen Additiv ist. Eine Zerstörung der Pumpe kann beispielsweise dadurch vermieden werden, dass die Fördereinheit beim Deaktivieren entleert wird, so dass während einer Stillstandsphase kein flüssiges Additiv in dem Fördermodul verbleibt. Eine andere Vorgehensweise zum Schutz der Pumpe ist es, in der Pumpe Maßnahmen zum Einfrierschutz bereitzustellen. Beispielsweise können die Pumpe bzw. deren Komponenten so flexibel ausgelegt werden, dass keine Beschädigung durch die Volumenausdehnung des flüssigen Additivs beim Einfrieren auftritt.

Insbesondere innerhalb der Pumpe ist es technisch sehr aufwendig, Maßnahmen zum Einfrierschutz zu gewährleisten, weil die Pumpe in intensivem Kontakt mit dem flüssigen Additiv stehen muss, um das flüssige Additiv fördern zu können. Darüber hinaus ist eine vollständige Entleerung der Pumpe oft problematisch, weil hierdurch eine Wiederaufnahme der Förderung nach einem Betriebsstopp deutlich erschwert wird.

Eine Pumpe zur Förderung von flüssigem Additiv sollte zudem möglichst kostengünstig sein und eine große Haltbarkeit aufweisen. Dies umfasst insbesondere eine hohe Zuverlässigkeit bzw. eine geringe Ausfallwahrscheinlichkeit sowie eine geringe Alterung. Der Begriff "Alterung" meint hier insbesondere eine Verschlechterung der Pumpe hinsichtlich Dosiergenauigkeit und Förderleistung infolge von Abnutzung.

Darüber hinaus ist regelmäßig auch eine exakte Fördermengenlieferfähigkeit der Pumpe wichtig. Mit einer exakten Fördermengenlieferfähigkeit bzw. mit dem analogen Begriff "Dosiergenauigkeit" ist hier insbesondere gemeint, dass die von der Pumpe tatsächlich geförderte Flüssigkeitsmenge genau von eindeutig bestimmbaren Eingangsgrößen vorgebbar ist, wobei der Begriff "Eingangsgröße" hier insbesondere die elektrische Ansteuerung des Antriebs der Pumpe (Spannungsprofil und/oder Stromprofil zum Antrieb der Pumpe, Frequenz von Stromfolgen zum Antrieb der Pumpe etc.) beschreibt. Insbesondere ist es wichtig, dass die Anzahl und/oder Relevanz von Quereinflüssen, die die Abhängigkeit der Fördermenge von den Eingangsgrößen beeinflussen, gering gehalten wird. Derartige Quereinflüsse können beispielsweise die Temperatur der Pumpe, der Druck in der Pumpe usw. sein. Wenn signifikante Quereinflüsse nicht vermeidbar sind, sollten die Auswirkungen dieser Quereinflüsse auf die Fördermenge möglichst genau berechenbar bzw. kontrollierbar sein. Die Dosiergenauigkeit einer Pumpe kann beispielsweise durch eine statistische Abweichung zwischen einer erwarteten, gewünschten Fördermenge und einer tatsächlich geförderten Fördermenge beschrieben werden. Beispielsweise hat eine Pumpe eine hohe Dosiergenauigkeit, wenn die Abweichung im Mittel weniger als 10 % beträgt. Eine Dosiergenauigkeit kann (für HWL-Fördermengen beim SCR-Verfahren) beispielsweise als gering angesehen werden, wenn diese Abweichung im Mittel mehr als 20 % beträgt. Diese Prozentwerte sind jeweils nur als Beispiel zu verstehen.

Aus den Druckschriften US 2,544,628, US 3,408,947, DE 285 39 16 A1 und DE 381 52 52 A1 ist ein Pumpentyp bekannt, der auch als Orbitalpumpe bezeichnet wird. Dieser Pumpentyp ist einerseits verhältnismäßig beständig gegenüber einer Volumenausdehnung einer Flüssigkeit beim Einfrieren, andererseits kann dieser Pumpentyp auch mit umgekehrter Förderrichtung betrieben werden, so dass eine Entleerung einer Fördereinheit mit einer solchen Pumpe einfach möglich ist. Aus der DE102011015110B3 ist eine weitere Pumpe bekannt, die eine Membran mit einer radialen Auswölbung zwischen dem Auslass und dem Einlass der Pumpe auf-weist, wobei die Pumpenkammer, in der die Membran angeordnet ist, einen kontinuierlich verlaufenden kreisförmigen Querschnitt besitzt. Es besteht das Bedürfnis, diesen Pumpentyp an die Anforderungen im Umfeld des SCR-Verfahrens anzupassen, insbesondere hinsichtlich der Dosiergenauigkeit und/oder des Alterungsverhaltens sowie hinsichtlich der Beständigkeit gegenüber Harnstoff-Wasser-Lösung und Eisdruck.

Hiervon ausgehend ist es Aufgabe der hier vorliegenden Erfindung, eine besonders vorteilhafte Pumpe zur Förderung einer Flüssigkeit vorzustellen, die die vorstehenden Probleme zumindest teilweise löst und insbesondere zur Förderung von flüssigen Additiven zur Abgasreinigung (wie Harnstoff-Wasser-Lösung) geeignet ist.

Diese Aufgabe wird gelöst mit einer Pumpe gemäß den Merkmalen des Patentanspruchs 1. Weitere vorteilhafte Ausgestaltungen der Pumpe sind in den abhängig formulierten Patentansprüchen angegeben. Es ist darauf hinzuweisen, dass die in den einzelnen Patentansprüchen erläuterten Merkmale in beliebiger, technologisch sinnvoller Weise miteinander kombinierbar sind und durch erläuternde Sachverhalte aus der Beschreibung ergänzt werden können, wobei weitere Ausführungsvarianten der Pumpe aufgezeigt werden.

Es wird eine Pumpe zur Förderung einer Flüssigkeit beschrieben, aufweisend zumindest ein Pumpengehäuse mit mindestens einem Einlass und mindestens einem Auslass und mit einer Innenumfangsfläche und einer geometrischen Achse, wobei innerhalb des Pumpengehäuses ein Exzenter angeordnet ist und der Exzenter um die geometrische Achse relativ zu dem Pumpengehäuse (exzentrisch) bewegbar ist, wobei in einem Pumpenspalt zwischen der Innenumfangsfläche des Pumpengehäuses und einer Außenfläche des Exzenters ein verformbares Element angeordnet ist und wobei mit dem verformbaren Element und der Innenumfangsfläche des Pumpengehäuses ein Förderkanal von dem mindestens einen Einlass zu dem mindestens einen Auslass ausgebildet ist und wobei weiter das verformbare Element von der Außenfläche des Exzenters entlang mindestens eines Abschnitts des Förderkanals derart gegen das Pumpengehäuse gedrückt wird, dass mindestens eine verschiebbare Abdichtung des Förderkanals und zumindest ein geschlossenes

Pumpenvolumen in dem Förderkanal ausgebildet sind, die zur Förderung der Flüssigkeit durch eine exzentrische Bewegung des Exzenters entlang des Förderkanals von dem Einlass zu dem Auslass verschiebbar sind, wobei zwischen dem Auslass und dem Einlass eine stationäre Abdichtung vorgesehen ist, die eine Rückströmung von Flüssigkeit von dem Auslass zurück zu dem Einlass verhindert, wobei die Innenumfangsfläche des Pumpengehäuses im Bereich der stationären Abdichtung eine Einbuchtung hat und das verformbare Element im Bereich der Einbuchtung mit einem Stift an der Innenumfangsfläche fluiddicht verspannt ist.

Eine Pumpe mit diesem Aufbau kann auch als Orbitalpumpe bezeichnet werden.

Die Pumpe weist eine (zentrale) geometrische Achse auf, um die herum der Exzenter gedreht werden kann. Dafür verläuft vorzugsweise entlang der Antriebsachse eine Antriebswelle, die den Exzenter mit einem (elektrisch betreibbaren) Antrieb verbindet. Der Antrieb ist vorzugsweise entlang der Achse oberhalb und/oder unterhalb des Pumpengehäuses angeordnet. Zur räumlichen Beschreibung der Pumpe und ihrer Komponenten wird im Folgenden eine radiale Richtung angenommen, die senkrecht auf der geometrischen Achse der Pumpe steht und sich ausgehend von der geometrischen Achse der Pumpe in radialer Richtung nach außen erstreckt. Ebenfalls senkrecht zu der geometrischen Achse sowie senkrecht zur radialen Richtung und tangential zur Innenumfangsfläche des Pumpengehäuses soll eine Umfangsrichtung definiert werden. Der Förderkanal verläuft von dem Einlass und zu dem Auslass der Pumpe zumindest abschnittsweise entlang dieser Umfangsrichtung durch das Pumpengehäuse bzw. entlang der Innenumfangsfläche des Pumpengehäuses. Zur weiteren Beschreibung der Pumpe wird auch eine Mittelebene der Pumpe definiert. Diese Mittelebene ist senkrecht zu der geometrischen Achse angeordnet. In der Mittelebene liegen das Pumpengehäuse, der Exzenter, das verformbare Element und der Förderkanal.

Das Pumpengehäuse der Pumpe ist vorzugsweise nach Art eines Rings oder einer zylindrischen Kammer aufgebaut, worin der Exzenter innen (innerhalb dieses Rings bzw. in der zylindrischen Kammer) angeordnet ist. Das Pumpengehäuse kann auch als (äußerer) Stator der Pumpe angesehen werden, wobei der Exzenter als (innerer) Rotor bezeichnet wird. Im Sinne einer kinematischen Umkehr soll die Erfindung auch solche Konstruktionen erfassen, bei denen das Pumpengehäuse mit Einlass und Auslass innen liegt und der Exzenter außen umläuft, wobei sich der Pumpenspalt zwischen Außenumfangsfläche des innenliegenden Pumpengehäuses und einer Innenfläche des Exzenters befindet. Gemäß dieser Ausführungsform der Pumpe ist es möglich, dass das Pumpengehäuse einen inneren Stator bildet, welcher von dem Exzenter umgeben ist. Dann bildet der Exzenter einen äußeren Rotor. Der Einlass und der Auslass sind an dem Pumpengehäuse angeordnet und ermöglichen das Einströmen und das Ausströmen der Flüssigkeit in das Pumpengehäuse bzw. in den Förderkanal.

Das Pumpengehäuse ist vorzugsweise aus Kunststoff. In dem Pumpengehäuse können Versteifungsstrukturen integriert sein. In einer bevorzugten Ausführungsvariante ist in einem Pumpengehäuse aus Kunststoff eine ringförmige metallische Einlage integriert, die das Pumpengehäuse versteift.

Mit dem Begriff "Exzenter" ist hier insbesondere eine kreisförmige Struktur gemeint, die exzentrisch (außermittig) zu der geometrischen Achse angeordnet ist und durch eine Drehung um die geometrische Achse herum eine exzentrische Bewegung durchführt. Zwischen dem Pumpengehäuse und dem Exzenter ist ein ringförmiger bzw. umlaufender Pumpenspalt gebildet, in dem das verformbare Element angeordnet ist. Der Förderkanal ist (innerhalb des Spalts) zwischen dem verformbaren Element und dem Pumpengehäuse angeordnet und wird von dem Pumpengehäuse und dem verformbaren Element begrenzt. Der Pumpenspalt hat mindestens eine Engstelle, die sich durch eine Drehung des Exzenters entlang des Pumpengehäuses bzw. entlang des Förderkanals verschiebt. An der Engstelle ist das verformbare Element gegen das Gehäuse gedrückt, so dass dort die verschiebbare Abdichtung gebildet ist. Der Förderkanal hat zwischen dem Pumpengehäuse und dem verformbaren Element einen für Flüssigkeit durchströmbaren Kanalquerschnitt, der beispielsweise (je nach Größe der Pumpe) an der größten Stelle zwischen 1 mm² [Quadratmillimeter] und 50 mm² betragen kann.

Der Förderkanal ist vorzugsweise ringförmig bzw. umlaufend um die Achse ausgebildet. Der Einlass und der Auslass sind in einer Förderrichtung der Pumpe vorzugsweise mit einem Winkelabstand von mehr als 270° zueinander (gemessen in der Mittelebene) angeordnet. Entgegen der Förderrichtung haben der Einlass und der Auslass damit einen Winkelabstand von weniger als 90° zueinander.

Der Exzenter ist vorzugsweise mehrteilig ausgeführt. Der Exzenter weist vorzugsweise einen inneren Exzenterbereich auf, welcher eine exzentrische Drehbewegung ausführt. Zusätzlich kann ein äußerer Ring vorgesehen sein, welcher den inneren Bereich umgibt. Zwischen dem inneren Bereich und dem äußeren Ring befindet sich vorzugsweise mindestens ein Lager. Dieses Lager kann ein Kugellager oder ein Rollenlager sein. Der innere Exzenterbereich des Exzenters führt im Betrieb eine Drehbewegung um die Achse aus. Aufgrund der exzentrischen Anordnung ergibt sich eine exzentrische Bewegung. Diese exzentrische Bewegung wird auf den äußeren Ring übertragen. Durch ein Lager zwischen dem inneren Exzenterbereich und einem Ring kann eine exzentrische Drehbewegung des inneren Exzenterbereichs in eine exzentrische Taumelbewegung des Rings umgewandelt werden, ohne dass der Drehbewegungsanteil der Bewegung des inneren Bereichs mit übertragen wird. Die Tatsache, dass die Bewegung des Rings keinen Drehbewegungsanteil aufweist, ermöglicht es, Schubspannungen in dem verformbaren Element und innere Reibungskräfte in der Pumpe zu reduzieren. Das verformbare Element wird durch die Bewegung des Exzenters gewalkt. An einer Kontaktfläche des Exzenters und des verformbaren Elements wirken vorzugsweise nur Druckkräfte und im Wesentlichen keine Reibungskräfte. Eine entsprechende Aufteilung des Exzenters in einen inneren Exzenterbereich und einen äußeren Ring ist auch möglich, wenn der Exzenter ein äußerer Rotor ist, der um ein (inneres) Pumpengehäuse herum angeordnet ist. Es ist auch möglich, dass auf den äußeren Ring verzichtet wird und die Rollen des Lagers unmittelbar auf bzw. an dem verformbaren Element abrollen.

Wie weiter oben bereits beschrieben, wird das verformbare Element zur Ausbildung der verschiebbaren Abdichtung bereichsweise bzw. abschnittsweise gegen die Innenumfangsfläche des Pumpengehäuses gedrückt. An der Abdichtung existiert ein (linienförmiger oder flächiger) Kontakt zwischen dem verformbaren Element und der Innenumfangsfläche des Pumpengehäuses, der von der Flüssigkeit nicht durchströmt werden kann. Anders ausgedrückt liegt das verformbare Element im Bereich der verschiebbaren Abdichtung vollständig an dem Pumpengehäuse an, so dass der Kanalquerschnitt im Bereich dieser verschiebbaren Abdichtung keine Querschnittsfläche hat. Der Förderkanal ist demnach im Bereich der verschiebbaren Abdichtung unterbrochen. Damit ist innerhalb des Förderkanals auch mindestens ein geschlossenes Pumpenvolumen gebildet. Mit einem geschlossenen Pumpenvolumen ist gemeint, dass ein zumindest einseitig (stromaufwärts oder stromabwärts entlang des Förderkanals) verschlossener Abschnitt des Förderkanals existiert. Durch eine Verschiebung der verschiebbaren Abdichtung wird auch das mindestens eine geschlossene Pumpenvolumen verschoben, so dass die Flüssigkeit, die sich in dem geschlossenen Pumpenvolumen befindet, gefördert wird. Vorzugsweise werden bei dem Betrieb der Pumpe mehrere geschlossene Pumpenvolumina von dem Einlass der Pumpe zu dem Auslass der Pumpe verschoben, um die Flüssigkeit zu fördern. Damit wird ein geschlossenes Pumpenvolumen in der Nähe des Einlasses ausgebildet (definiert zumindest einseitig verschlossen) und dann am Auslass aufgelöst (definiert zumindest einseitig wieder geöffnet) . An dem Einlass ist ein geschlossenes Pumpenvolumen (nur) einseitig stromab durch eine verschiebbare Abdichtung verschlossen und stromauf mit dem Einlass verbunden, so dass Flüssigkeit durch den Einlass in das geschlossene Pumpenvolumen einströmen kann. An dem Auslass ist das geschlossene Pumpenvolumen (nur noch) einseitig allerdings stromauf durch eine Abdichtung verschlossen und stromab mit dem Auslass verbunden, so dass die Flüssigkeit durch den Auslass aus dem geschlossenen Pumpenvolumen ausströmen kann. Dazwischen existiert (auf dem Weg des geschlossenen Pumpenvolumens von dem Einlass zu dem Auslass) eine Phase, in der das geschlossene Pumpenvolumen stromaufwärts und stromabwärts durch die mindestens eine verschiebbare Abdichtung verschlossen ist.

Das verformbare Element kann auch als verformbare Membran bezeichnet werden. Mit dem Begriff "Membran" ist hier keine zwingende Aussage darüber getroffen, ob das verformbare Element eine flächige Ausdehnung hat. Der Begriff "Membran" soll als Hinweis verstanden werden, dass es sich bei dem verformbaren Element um eine flexible Struktur handelt, die zur Förderung von Flüssigkeit verformt werden kann. Als Material für das verformbare Element bzw. die verformbare Membran wird vorzugsweise ein Elastomermaterial (beispielsweise Kautschuk oder Latex) verwendet. Zur Erhöhung der Haltbarkeit und/oder zur Herstellung und Aufrechterhaltung der Flexibilität kann das Material des verformbaren Elements Zusatzstoffe enthalten. Vorzugsweise ist das verformbare Element in alle Richtungen (in axialer Richtung, in radialer Richtung und in Umfangsrichtung) flexibel. Es ist allerdings auch möglich, dass das verformbare Element eine teilweise gerichtete Flexibilität hat. Beispielsweise kann es eine höhere Flexibilität in radialer Richtung als in Umfangsrichtung und in axialer Richtung aufweisen. Ein Verformen des verformbaren Elements in einer Richtung bedingt typischerweise auch eine Verformung in andere Richtungen. Das verformbare Element dehnt sich beispielsweise in axialer Richtung und/oder in Umfangsrichtung aus, wenn es in radialer Richtung zusammengedrückt wird.

An der Pumpe ist auch eine stationäre Abdichtung vorgesehen, die eine nicht gewollte Rückströmung von Flüssigkeit von dem Auslass zu dem Einlass (entgegen der Förderrichtung) verhindert. Die stationäre Abdichtung ist durch eine Einbuchtung in dem Pumpengehäuse ausgeführt, in welcher die Innenumfangsfläche des Pumpengehäuses, ausgehend von der geometrischen Achse, nach außen ausgewölbt ist. Der Begriff "Einbuchtung" soll hier auch ausdrücken, dass die Innenumfangsfläche hier von der geometrischen Achse der Pumpe aus gesehen zurücktritt. Vorzugsweise hat das verformbare Element im Bereich dieser Einbuchtung eine Ausbuchtung, deren Form der Form der Einbuchtung im Wesentlichen entspricht und die sich dementsprechend ebenfalls ausgehend von der geometrischen Achse nach außen erstreckt. Vorzugsweise hat das verformbare Element im Bereich dieser Ausbuchtung eine Öffnung, die sich in axialer Richtung durch das verformbare Element erstreckt. In diese Öffnung ist der Stift eingesetzt ist. Diese Öffnung steht nicht mit dem Förderkanal in Verbindung. Zwischen der Öffnung bzw. dem Stift und der Innenumfangsfläche des Pumpengehäuses erstreckt sich ein (stegförmiger) Abschnitt des Pumpengehäuses. Das Material des verformbaren Elements ist zwischen dem Stift und der Innenumfangsfläche des Pumpengehäuses fluiddicht verspannt. Dazu drückt der Stift den (stegförmigen) Abschnitt des verformbaren Elements gegen die Innenumfangsfläche des Pumpengehäuses in der Einbuchtung. Eine stationäre Abdichtung, die mit einer solchen Einbuchtung und einem solchen Stift ausgebildet ist, verhindert eine Rückströmung von Flüssigkeit von dem Auslass zurück zu dem Einlass in besonders effektiver Weise. Insbesondere ist es möglich, das verformbare Element und das Pumpengehäuse im Bereich der Einbuchtung speziell für die stationäre Abdichtung auszulegen.

Weiterhin vorteilhaft ist die Pumpe, wenn der Stift derart in der Einbuchtung angeordnet ist, dass dieser außerhalb einer von der Innenumfangsfläche gebildeten zylindrischen Grundform liegt.

Die zylindrische Grundform entspricht einem Großteil der Innenumfangsfläche des Pumpengehäuses. Insbesondere der in Förderrichtung zwischen Einlass und Auslass liegende Abschnitt der Innenumfangsfläche entspricht der zylindrischen Grundform. Dieser Abschnitt entspricht vorzugsweise mehr als 270° der zylindrischen Grundform. Die Einbuchtung, in welcher der Stift angeordnet ist, ist demnach lediglich eine lokale Abweichung von der zylindrischen Grundform im Bereich der stationären Abdichtung zwischen dem Auslass und dem Einlass.

Durch die Positionierung des Stifts in der Einbuchtung außerhalb der zylindrischen Grundform kann gewährleistet werden, dass der Exzenter der Pumpe sich auch im Bereich der stationären Abdichtung unabhängig von der stationären Abdichtung bewegt. Insbesondere hat die stationäre Abdichtung vorzugsweise keine Auswirkung auf die Kräfte, welche bei der (Dreh-)bewegung des Exzenters auftreten.

Außerdem vorteilhaft ist die Pumpe, wenn die Innenumfangsfläche eine zylindrische Grundform aufweist und der Förderkanal von der Innenumfangsfläche und einer konkaven Kanaloberfläche des verformbaren Elements gebildet ist, wobei das verformbare Element und die Innenumfangsfläche in axialer Richtung beidseitig des Förderkanals jeweils in mindestens einem ringförmigen Abdichtkontakt aneinander anliegen.

Das verformbare Element ist üblicherweise selbst ringförmig bzw. zylindrisch. Vorzugsweise hat das verformbare Element in axialer Richtung entlang der geometrischen Achse (vorzugsweise beidseitig) einen in radialer Richtung vorstehenden Überstand, der sich vollumfänglich entlang des verformbaren Elements erstreckt. Die konkave Kanaloberfläche ist zumindest teilweise durch diesen ringförmigen Überstand ausgeformt. Der Begriff "konkav" meint in diesem Zusammenhang, dass auf der Außenfläche des verformbaren Elements eine Art Rinne gebildet ist.

Die Rinne auf der Außenfläche des verformbaren Elements kann beispielsweise zwischen zwei beidseitig, im Randbereich des verformbaren Elements ringförmig ausgebildeten Überständen gebildet sein, zwischen welchen ein Bereich der Oberfläche des verformbaren Elements zurücktritt. In weiteren Ausführungsvarianten kann aber auch die Oberfläche des verformbaren Elements insgesamt in axialer Richtung konkav ausgeführt sein oder es ist an dem verformbaren Element nur einseitig ein ringförmiger Überstand ausgebildet. Vorzugsweise ist die Innenumfangsfläche im Bereich einer Mittelebene der Pumpe aber in axialer Richtung eben bzw. plan und die konkave Kanaloberfläche des verformbaren Elements ist durch die ringförmigen Überstände ausgebildet. Vorzugsweise nimmt der Durchmesser des verformbaren Elements beidseitig zur Mittelebene der Pumpe (etwas) zu.

Eine Querschnittsfläche des Förderkanals in einer Ebene, die von axialer Richtung und radialer Richtung aufgespannt wird, wird dementsprechend jeweils von einem gradlinigen Abschnitt der Innenumfangsfläche des Pumpengehäuses und von einem konkaven Abschnitt des verformbaren Elements begrenzt.

Es hat sich herausgestellt, dass diese Ausbildung der Querschnittsfläche eines Förderkanals einer Orbitalpumpe beachtliche Vorteile gegenüber einer Gestaltung des Kanalquerschnitts mit einer konkaven Oberfläche des Pumpengehäuses und einer in axialer Richtung ebenen Gestalt des verformbaren Elements hat. Insbesondere ermöglicht die zylindrischen Grundform der Innenumfangsfläche eine gleichmäßige Verformung des verformbaren Elements in Folge des Drucks in dem Förderkanal, bei der eine gleichmäßige Verschiebung der ringförmigen Abdichtkontakte in axialer Richtung nach innen oder nach außen auftritt.

Weiterhin vorteilhaft ist die Pumpe, wenn das verformbare Element beidseits des Förderwegs jeweils eine Mehrzahl von radial umlaufenden Dichtlippen aufweist, die an der Innenumfangsfläche des Pumpengehäuses anliegen und die ringförmigen Abdichtkontakte bilden.

Es hat sich herausgestellt, dass eine sehr viel höhere Dichtwirkung an den ringförmigen Abdichtkontakten gewährleistet werden kann, wenn jeweils eine Mehrzahl von radial umlaufenden Dichtlippen anstatt einer einzigen Dichtlippe vorhanden sind. Die Dichtlippen bestehen vorzugsweise aus dem Material des verformbaren Elements.

Die Pumpe ist außerdem vorteilhaft, wenn das verformbare Element im Bereich der stationären Abdichtung eine Mehrzahl von parallel zur geometrischen Achse verlaufenden Dichtlippen aufweist, die in der Einbuchtung an der Innenumfangsfläche des Pumpengehäuses anliegen und so die stationäre Abdichtung bilden.

Auch an der stationären Abdichtung kann eine erhöhte Dichtwirkung durch eine Mehrzahl von Dichtlippen erreicht werden.

Vorzugsweise gehen die Dichtlippen, welche die ringförmigen Abdichtkontakte bilden, sowie die Dichtlippen, die die stationäre Abdichtung bilden, ineinander über. Dies kann beispielsweise dadurch gewährleistet sein, dass diese Dichtlippen sich überschneiden.

Besonders bevorzugt ist, wenn das verformbare Element in axialer Richtung beidseitig des Exzenters jeweils zwischen der Innenumfangsfläche und einem Zentrierungsring angeordnet ist, wobei das verformbare Element jeweils von den Zentrierungsringen gegen die Innenumfangsfläche des Pumpengehäuses gedrückt wird, so dass jeweils ein ringförmiger Abdichtkontakt ausgebildet ist.

Das verformbare Element ist jeweils mit Hilfe der Zentrierungsringe an dem Pumpengehäuse bzw. an der Innenumfangsfläche des Pumpengehäuses verspannt. Die Zentrierungsringe liegen jeweils innen an dem verformbaren Element an und ein Spalt zwischen den Zentrierungsringen und dem Pumpengehäuse ist so ausgeführt, dass eine Quetschung des verformbaren Elements zwischen den Zentrierungsringen und dem Pumpengehäuse (bzw. der Innenumfangsfläche des Pumpengehäuses) auftritt. Mit Hilfe der Zentrierungsringe kann eine besonders gleichmäßige und eine selbstzentrierende Ausbildung der ringförmigen Abdichtkontakte gewährleistet werden, welche im Wesentlichen über den gesamten Umfang des Pumpengehäuses gleichmäßige Abdichtkräfte aufweist. Gleichmäßige Abdichtkräfte ermöglichen es, eine hohe Dichtigkeit der Pumpe bei gleichzeitig minimaler Verformung des verformbaren Elements zu erreichen. Insbesondere werden lokale Überdehnungen des verformbaren Elements so vermieden.

Weiterhin vorteilhaft ist die Pumpe, wenn die beidseitig des Exzenters angeordneten Zentrierungsringe im Bereich der stationären Abdichtung eine Ausbuchtung aufweisen, die in die Einbuchtung der Innenumfangsfläche des Pumpengehäuses hineinragt.

Solche Zentrierungsringe mit einer Ausbuchtung sind können ebenfalls selbstzentrierend sein, wenn die Zentrierungsringe in der Ausbuchtung ausreichend Spiel haben, so dass die Selbstzentrierbarkeit erhalten bleibt. Durch die Ausbuchtung wird allerdings zusätzlich ein unmittelbarer und unterbrechungsfreier Übergang zwischen der stationären Abdichtung und den radialen Abdichtkontakten möglich.

Besonders bevorzugt schließen die Zentrierungsringe mit dem Stift an der stationären Abdichtung bündig ab, so dass die Pressung des verformbaren Elements zwischen den Zentrierungsringen und dem Pumpengehäuse und zwischen dem Stift und dem Pumpengehäuse direkt ineinander übergehen. Insbesondere ist ein Druck, der von den Zentrierungsringen auf das verformbare Element ausgeübt wird, genauso groß wie ein Druck, der von dem Stift auf das verformbare Element ausgeübt wird.

In einer weiteren vorteilhaft vorteilhaften Ausführungsvariante fixiert der Stift die Zentrierungsringe im Bereich der stationären Abdichtung.

Hierdurch wird eine Verdrehung der Zentrierungsringe relativ zum Pumpengehäuse verhindert. Gegebenenfalls fixiert der Stift die Zentrierungsringe in einer Art und Weise, die trotzdem eine (geringe) Bewegung der Zentrierungsringe relativ zu dem Pumpengehäuse zulässt. Dann wird die Fähigkeit der Zentrierungsringe, sich in dem Pumpengehäuse selbst zu zentrieren, durch die Fixierung nicht beeinträchtigt.

Hier auch beschrieben werden soll ein Kraftfahrzeug, aufweisend eine Verbrennungskraftmaschine, eine Abgasbehandlungsvorrichtung zur Reinigung der Abgase der Verbrennungskraftmaschine mit einem SCR-Katalysator, mit dem das SCR-Verfahren durchgeführt werden kann, wobei dem SCR-Katalysator eine Flüssigkeit zur Abgasreinigung mit einer beschriebenen Pumpe zugeführt wird.

Die Erfindung sowie das technische Umfeld werden nachfolgend anhand der Figuren näher erläutert. Es ist darauf hinzuweisen, dass die Figuren nur schematisch sind und jeweils nur bevorzugte Ausführungsbeispiele der Erfindung zeigen. Insbesondere die in den Figuren dargestellten Größenverhältnisse sind nur schematisch zu verstehen. Es zeigen:
- Fig. 1:: eine isometrische Ansicht einer beschriebenen Pumpe,
- Fig. 2:: einen Schnitt durch eine beschriebene Pumpe,
- Fig. 3:: einen weiteren Schnitt durch eine beschriebene Pumpe entlang der in Fig. 2 dargestellten Schnittrichtung B-B;
- Fig. 4:: einen weiteren Schnitt durch eine beschriebene Pumpe entlang der in der Fig. 2 dargestellten Schnittrichtung A-A,
- Fig. 5:: eine isometrische Darstellung eines verformbaren Elements einer beschriebenen Pumpe,
- Fig. 6:: eine isometrische Schnittdarstellung durch das verformbare Element aus Fig. 5; und
- Fig. 7:: ein Kraftfahrzeug mit einer beschriebenen Pumpe.

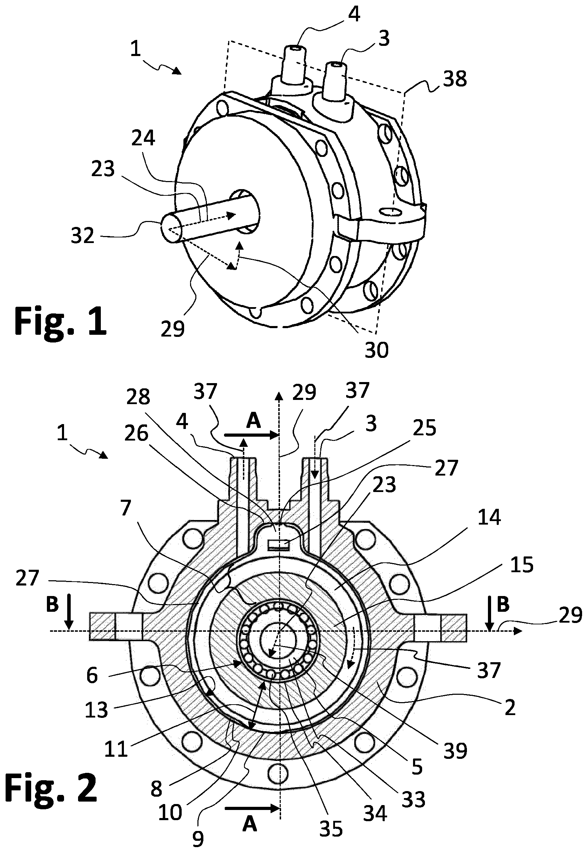

In Fig. 1 ist die beschriebene Pumpe 1 in einer isometrischen Ansicht von außen dargestellt. Zu erkennen sind das Pumpengehäuse 2 mit dem Einlass 3 und dem Auslass 4. Weiter zu erkennen ist eine Antriebsachse 32, über die der hier nicht dargestellte Exzenter in dem Pumpengehäuse 2 angetrieben werden kann. Entlang der Antriebsachse 32 sind eine axiale Richtung 24 und eine geometrische Achse 23 der Pumpe 1 definiert. Darüber hinaus sind eine senkrecht auf der axialen Richtung 24 und der geometrischen Achse 23 stehende radiale Richtung 29 sowie eine tangentiale Umfangsrichtung 30 senkrecht zu der axialen Richtung 24 und der geometrischen Achse 23 definiert. Das Koordinatensystem aus axialer Richtung 24, radialer Richtung 29 und Umfangsrichtung 30 wird im Folgenden zur räumlichen Beschreibung der Pumpe verwendet . Fig. 1 deutet darüber hinaus eine Mittelebene 38 der Pumpe 1 an.

Fig. 2 zeigt einen Schnitt durch die Fig. 1 dargestellte Pumpe 1 senkrecht zur radialen Richtung 24 aus Fig. 1 in der Mittelebene 38 der Pumpe 1. Es ist zu erkennen, dass die Mittelebene 38 das Pumpengehäuse 2 in der Ebene schneidet, in der auch der Einlass 3 und der Auslass 4 liegen. Zur Orientierung sind hier zwei verschiedene radiale Richtungen 29 dargestellt, die senkrecht aufeinander stehen, wobei diese radialen Richtungen 29 anhand des Einlasses 3 und des Auslasses 4 der Pumpe 1 ausgerichtet sind. In dem Pumpengehäuse 2 befindet sich der Exzenter 5. Der Exzenter 5 hat einen inneren Exzenterbereich 33 mit einer Exzentrizität 39, einem Exzenterlager 35 und einem äußeren Ring 34. Zwischen einer Außenfläche 6 des Exzenters 5 und einer Innenumfangsfläche 13 des Pumpengehäuses 2 befindet sich ein Pumpenspalt 11, in welchem das verformbare Element 7 angeordnet ist. Zwischen dem verformbaren Element 7 und dem Pumpengehäuse 2 befindet sich ein Förderkanal 8, der den Einlass 3 mit dem Auslass 4 verbindet und durch welchen die Flüssigkeit durch eine Bewegung des Exzenters 5 entlang der Förderrichtung 37 gefördert werden kann. Dazu liegt das verformbare Element 7 an einer verschiebbaren Abdichtung 9 an der Innenumfangsfläche 13 des Pumpengehäuses 2 an und unterteilt den Förderkanal 8 in verschiebbare Pumpenvolumina 10. Zwischen dem Einlass 3 und dem Auslass 4 ist eine stationäre Abdichtung 25 ausgebildet, die unabhängig von der Position des Exzenters 5 eine fluiddichte Anlage zwischen dem Pumpengehäuse 2 und dem verformbaren Element 7 gewährleistet, so eine Rückströmung von Flüssigkeit von dem Auslass 4 zum Einlass 3 entgegen der Förderrichtung 37 verhindert. Die stationäre Abdichtung 25 ist durch eine Einbuchtung 26 der Innenumfangsfläche 13 des Pumpengehäuses 2 ausgebildet, in der das verformbare Element 7 mit einem Stift 27 fest gegen das Pumpengehäuse 2 bzw. gegen die Innenumfangsfläche 13 des Pumpengehäuses 2 verspannt ist.

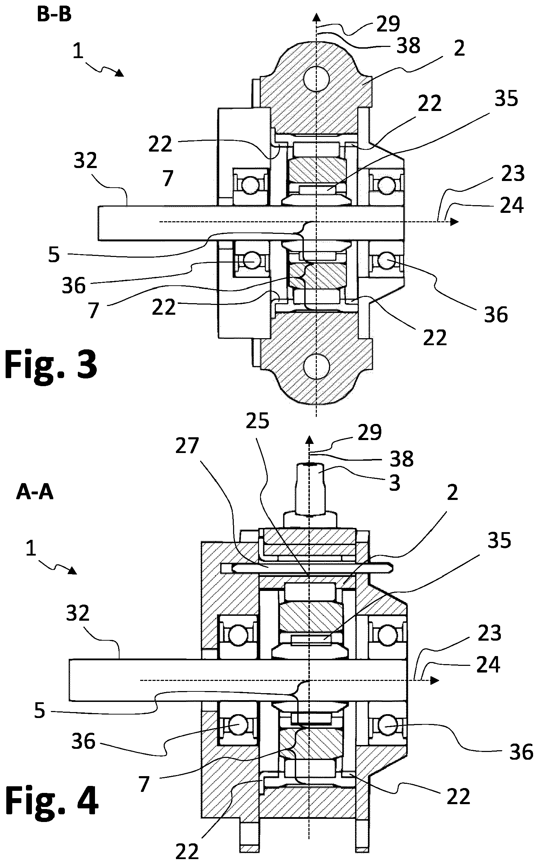

Fig. 3 zeigt einen Schnitt durch die Pumpe 1 entlang der in Fig. 2 dargestellten Schnittrichtung B-B. Zur Orientierung sind hier die radiale Richtung 29, die axiale Richtung 24, die Mittelebene 38 und die geometrische Achse 23 der Pumpe dargestellt. Entlang der axialen Richtung verläuft auch die Antriebsachse 32 der Pumpe 1. Zu erkennen ist das Pumpengehäuse 2 mit dem darin angeordneten Exzenter 5 aufweisend inneren Exzenterbereich 33, äußeren Ring 34 und dazwischen angeordnetes Exzenterlager 35. Zu erkennen ist außerdem das verformbare Element 7. Die Antriebsachse 32 ist in axialer Richtung 24 beidseitig des verformbaren Elements 7 jeweils mit einem Achsenlager 36 gelagert. In axialer Richtung 24 wird das verformbare Element 7 darüber hinaus beidseitig von Zentrierungsringen 22 unterstützt, welche das verformbare Element 7 jeweils mit einem ringförmigen Abdichtkontakt 20 an das Pumpengehäuse 2 andrücken. So ist zwischen dem Pumpengehäuse 2 und dem Exzenter 5, bzw. zwischen dem Pumpengehäuse 2 und dem verformbaren Element 7, der Förderkanal 8 ausgebildet, der (in axialer Richtung 24) beidseitig von ringförmigen Abdichtkontakten 20 begrenzt wird.

Fig. 4 zeigt einen Schnitt durch die Pumpe 1 entlang der in Fig. 2 dargestellten Schnittrichtung A-A, wobei dieser Schnitt im Wesentlichen dem in Fig. 2 dargestellten Schnitt entspricht. Die Schnittrichtung A-A ist allerdings so festgelegt, dass im oberen Bereich die stationäre Abdichtung 25 angeschnitten ist. Zu erkennen sind das verformbare Element 7 an der stationären Abdichtung 25, wobei ein Stift 27 das verformbare Element 7 gegen das Pumpengehäuse 2 drückt.

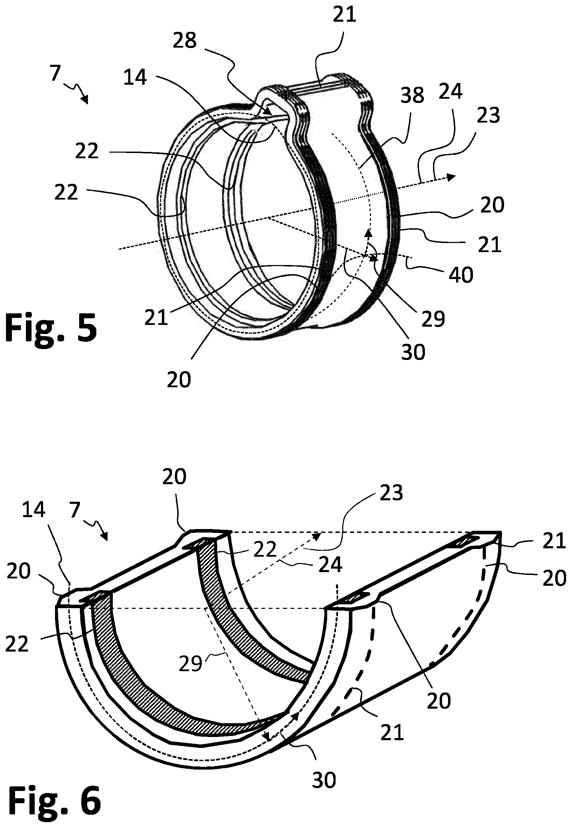

Fig. 5 zeigt eine isometrische Ansicht eines verformbaren Elements 7 für die beschriebene Pumpe. Zur Orientierung sind hier die geometrische Achse 23, die axiale Richtung 24, die radiale Richtung 29 und die Umfangsrichtung 30 dargestellt. Durch eine gestrichelte Linie angedeutet, ist die Position der Mittelebene 38. An dem verformbaren Element 7 sind Dichtlippen 21 ausgebildet, mit welchen das verformbare Element 7 an dem Pumpengehäuse der Pumpe fluiddicht anliegt, so dass ringförmige Abdichtkontakte 20 zwischen dem (hier nicht dargestellten) Pumpengehäuse und dem verformbaren Element 7 gebildet werden, um den Förderkanal zu begrenzen. Zur Ausbildung der stationären Abdichtung und zur Aufnahme eines Pins für die Ausbildung der stationären Abdichtung weist das verformbare Element 7 eine Ausbuchtung 28 auf, in welche ein Stift zur Ausbildung der stationären Abdichtung eingelegt werden kann. In axialer Richtung 24 beidseitig sind an dem verformbaren Element auch Zentrierungsringe 22 ausgebildet, mit welchen die Dichtlippen 21 des verformbaren Elements 7 gegen das Pumpengehäuse der Pumpe gedrückt werden können, um die ringförmigen Abdichtkontakte 20 auszubilden. Gestrichelt dargestellt ist auch eine konkave Kanaloberfläche 40 des verformbaren Elements 7. Die konkave Form der Kanaloberfläche 40 ergibt sich gemäß Fig. 5 durch die Dichtlippen 21, die in axialer Richtung 24 beidseitig der Mittelebene 38 an dem hier nicht dargestellten Pumpengehäuse anliegen. Diese Dichtlippen 21 bedingen, dass das verformbare Element 7 im Bereich der Mittelebene 38 einen kleineren Durchmesser hat als seitlich der Mittelebene 38.

Zum besseren Verständnis ist das in Fig. 5 dargestellte verformbare Element 7 in Fig. 6 noch einmal in einem Schnitt dargestellt. Zur Orientierung sind hier auch die geometrische Achse 23, die axiale Richtung 24, die radiale Richtung 29 und die Umfangsrichtung 30 eingetragen. Zu erkennen sind hier die Zentrierungsringe 22, die in axialer Richtung 24 beidseitig an dem verformbaren Element 7 angeordnet sind. Als wulstförmige Erhebung angedeutet sind die Dichtlippen 21 des verformbaren Elements sowie gestrichelt die ringförmigen Abdichtkontakte 20, mit welchem die Dichtlippen 21 an dem hier nicht dargestellten Pumpengehäuse fluiddicht anliegen.

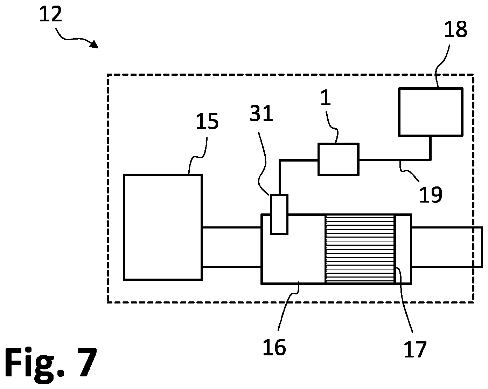

Fig. 7 zeigt ein Kraftfahrzeug 12, aufweisend eine Verbrennungskraftmaschine 15 sowie eine Abgasbehandlungsvorrichtung 16 zur Reinigung der Abgase der Verbrennungskraftmaschine 15. In der Abgasbehandlungsvorrichtung 16 ist ein SCR- Katalysator 17 angeordnet, mit welchem das Verfahren der selektiven katalytischen Reduktion durchgeführt werden kann. Dafür wird mit einem Injektor 31 flüssiges Additiv zur Abgasreinigung zu der Abgasbehandlungsvorrichtung 16 zugeführt. Das flüssige Additiv wird von einer vorstehend beschriebenen Pumpe 1 über eine Leitung 19 aus einem Tank 18 zu dem Injektor 31 gefördert.

Durch die beschriebene Erfindung wird eine Orbitalpumpe mit einem besonders gleichmäßigen Förderverhalten und einer hohen Sicherheit gegenüber einer Rückströmung von Flüssigkeit von einem Auslass der Pumpe zurück zu dem Einlass der Pumpe offenbart.

### Bezugszeichenliste

- 1: Pumpe
- 2: Pumpengehäuse
- 3: Einlass
- 4: Auslass
- 5: Exzenter
- 6: Außenfläche
- 7: verformbares Element
- 8: Förderkanal
- 9: verschiebbare Abdichtung
- 10: Pumpenvolumen
- 11: Pumpenspalt
- 12: Kraftfahrzeug
- 13: Innenumfangsfläche
- 14: zylindrische Grundform
- 15: Verbrennungskraftmaschine
- 16: Abgasbehandlungsvorrichtung
- 17: SCR-Katalysator
- 18: Tank
- 19: Leitung
- 20: ringförmiger Abdichtkontakt
- 21: Dichtlippe
- 22: Zentrierungsring
- 23: geometrische Achse
- 24: axiale Richtung
- 25: stationäre Abdichtung
- 26: Einbuchtung
- 27: Stift
- 28: Ausbuchtung
- 29: radiale Richtung
- 30: Umfangsrichtung
- 31: Injektor
- 32: Antriebsachse
- 33: innerer Exzenterbereich
- 34: äußerer Ring
- 35: Exzenterlager
- 36: Achsenlager
- 37: Förderrichtung
- 38: Mittelebene
- 39: Exzentrizität
- 40: Kanaloberfläche

## Patentansprüche

1. Pumpe (1) zur Förderung einer Flüssigkeit, aufweisend zumindest ein Pumpengehäuse (2) mit mindestens einem Einlass (3) und mindestens einem Auslass (4), und mit einer Innenumfangsfläche (13) und einer geometrischen Achse (23), wobei innerhalb des Pumpengehäuses (2) ein Exzenter (5) angeordnet ist und der Exzenter (5) um die geometrische Achse (23) relativ zu dem Pumpengehäuse (2) bewegbar ist, wobei in einem Pumpenspalt (11) zwischen der Innenumfangsfläche (13) des Pumpengehäuses (2) und einer Außenfläche (6) des Exzenters (5) ein verformbares Element (7) angeordnet ist und wobei mit dem verformbaren Element (7) und der Innenumfangsfläche (13) des Pumpengehäuses (2) ein Förderkanal (8) von dem mindestens einen Einlass (3) zu dem mindestens einen Auslass (4) ausgebildet ist und wobei weiter das verformbare Element (7) von der Außenfläche (6) des Exzenters (5) entlang mindestens eines Abschnitts des Förderkanals (8) derart gegen das Pumpengehäuse (2) gedrückt wird, dass mindestens eine verschiebbare Abdichtung (9) des Förderkanals (8) und zumindest ein geschlossenes Pumpenvolumen (10) in dem Förderkanal (8) ausgebildet sind, die zur Förderung der Flüssigkeit durch eine exzentrische Bewegung des Exzenters (5) entlang des Förderkanals (8) von dem Einlass (3) zu dem Auslass (4) verschiebbar sind, wobei zwischen dem Auslass (4) und dem Einlass (3) eine stationäre Abdichtung (25) vorgesehen ist, die eine Rückströmung von Flüssigkeit von dem Auslass (4) zurück zu dem Einlass (3) verhindert, **dadurch gekennzeichnet, dass** die Innenumfangsfläche (13) des Pumpengehäuses (2) im Bereich der stationären Abdichtung (25) eine Einbuchtung (26) hat und das verformbare Element (7) im Bereich der Einbuchtung (26) mit einem Stift (27) an der Innenumfangsfläche (13) fluiddicht verspannt ist.

2. Pumpe (1) nach Patentanspruch 1, wobei der Stift (27) derart in der Einbuchtung (26) angeordnet ist, dass dieser außerhalb einer von der Innenumfangsfläche (13) gebildeten zylindrischen Grundform (14) liegt.

3. Pumpe (1) nach einem der vorhergehenden Patentansprüche, wobei die Innenumfangsfläche (13) eine zylindrische Grundform (14) aufweist und der Förderkanal (8) von der Innenumfangsfläche (13) und einer konkaven Kanaloberfläche des verformbaren Elementes (7) gebildet ist, wobei das verformbare Element (7) und die Innenumfangsfläche (13) in axialer Richtung (24) beidseitig des Förderkanals (8) jeweils in mindestens einem ringförmigen Abdichtkontakt (20) aneinander anliegen.

4. Pumpe (1) nach einem der vorhergehenden Patentansprüche, wobei das verformbare Element (7) beidseits des Förderkanals (8) jeweils eine Mehrzahl von radial umlaufenden Dichtlippen (21) aufweist, die an der Innenumfangsfläche (13) des Pumpengehäuses (2) anliegen und die ringförmigen Abdichtkontakte (20) bilden.

5. Pumpe (1) nach einem der vorhergehenden Patentansprüche, wobei das verformbare Element im Bereich der stationären Abdichtung (25) eine Mehrzahl von parallel zur geometrischen Achse (23) verlaufenden Dichtlippen (21) aufweist, die in der Einbuchtung (26) an der Innenumfangsfläche (13) des Pumpengehäuses (2) anliegen und die stationäre Abdichtung (25) bilden.

6. Pumpe (1) nach einem der vorgehenden Patentansprüche, wobei das verformbare Element (7) in axialer Richtung (24) beidseitig des Exzenters (5) jeweils zwischen der Innenumfangsfläche (13) und einem Zentrierungsring (22) angeordnet ist, wobei das verformbare Element (7) jeweils von den Zentrierungsringen (22) gegen die Innenumfangsfläche (13) des Pumpengehäuses (2) gedrückt wird, so dass jeweils ein ringförmiger Abdichtkontakt (20) gebildet ist.

7. Pumpe (1) nach Patentanspruch 6, wobei die beidseitig des Exzenters (5) angeordneten Zentrierungsringe (22) im Bereich der stationären Abdichtung (25) eine Ausbuchtung (28) aufweisen, die in die Einbuchtung (26) der Innenumfangsfläche (13) des Pumpengehäuses (2) hineinragt.

8. Pumpe (1) nach Patentanspruch 7, wobei der Stift (27) die Zentrierungsringe (22) im Bereich der stationären Abdichtung (25) fixiert.

9. Kraftfahrzeug (12) aufweisend eine Verbrennungskraftmaschine (15), eine Abgasbehandlungsvorrichtung (16) zur Reinigung der Abgase der Verbrennungskraftmaschine (15) mit einem SCR-Katalysator (17), mit dem das SCR-Verfahren durchgeführt wird, **dadurch gekennzeichnet, dass** dem SCR-Katalysator (17) eine Flüssigkeit zur Abgasreinigung mit einer Pumpe (1) gemäß einem der vorhergehenden Ansprüche zugeführt wird.

## Claims

1. Pump (1) for delivering a liquid, having at least one pump housing (2) with at least one inlet (3) and at least one outlet (4), and having an inner circumferential face (13) and having a geometric axis (23), wherein an eccentric (5) is arranged within the pump housing (2) and the eccentric (5) is movable relative to the pump housing (2) about the geometric axis (23), wherein a deformable element (7) is arranged in a pump gap (11) between the inner circumferential face (13) of the pump housing (2) and an outer face (6) of the eccentric (5), and wherein a delivery duct (8) is formed from the at least one inlet (3) to the at least one outlet (4) by the deformable element (7) and by the inner circumferential face (13) of the pump housing (2), and wherein furthermore, the deformable element (7) is pressed against the pump housing (2) along at least one section of the delivery duct (8) by the outer face (6) of the eccentric (5) such that at least one displaceable seal (9) of the delivery duct (8) and at least one closed pump volume (10) are formed in the delivery duct (8), these being displaceable along the delivery duct (8) from the inlet (3) to the outlet (4) by means of an eccentric movement of the eccentric (5) for the delivery of the liquid, wherein, between the outlet (4) and the inlet (3), there is provided a static seal (25) which prevents a backflow of liquid from the outlet (4) back to the inlet (3), **characterized in that** the inner circumferential face (13) of the pump housing (2) has a recess (26) in the region of the static seal (25), and the deformable element (7) is braced in fluid-tight fashion against the inner circumferential face (13) in the region of the recess (26) by means of a pin (27).

2. Pump (1) according to Patent Claim 1, wherein the pin (27) is arranged in the recess (26) such that said pin is situated outside
a cylindrical basic form (14) formed by the inner circumferential face (13).

3. Pump (1) according to one of the preceding patent claims, wherein the inner circumferential face (13) has a cylindrical basic form (14) and the delivery duct (8) is formed by the inner circumferential face (13) and by a concave duct surface of the deformable element (7), wherein the deformable element (7) and the inner circumferential face (13) bear against one another in each case at at least one annular contact seal (20) at both sides of the delivery duct (8) as viewed in the axial direction (24).

4. Pump (1) according to one of the preceding patent claims, wherein the deformable element (7) has in each case a multiplicity of radially encircling sealing lips (21) at both sides of the delivery duct (8), which sealing lips bear against the inner circumferential face (13) of the pump housing (2) and form the annular contact seals (20).

5. Pump (1) according to one of the preceding patent claims, wherein the deformable element has, in the region of the static seal (25), a multiplicity of sealing lips (21) which run parallel to the geometric axis (23) and which bear against the inner circumferential face (13) of the pump housing (2) in the recess (26) and form the static seal (25).

6. Pump (1) according to one of the preceding patent claims, wherein, at both sides of the eccentric (5) in the axial direction (24), the deformable element (7) is arranged in each case between the inner circumferential face (13) and a centering ring (22), wherein the deformable element (7) is pressed by the centering rings (22) against the inner circumferential face (13) of the pump housing (2) in each case, such that in each case one annular contact seal (20) is formed.

7. Pump (1) according to Patent Claim 6, wherein the centering rings (22) arranged at both sides of the eccentric (5) have, in the region of the static seal (25), a protuberance (28) which projects into the recess (26) of the inner circumferential face (13) of the pump housing (2) .

8. Pump (1) according to Patent Claim 7, wherein the pin (27) fixes the centering rings (22) in the region of the static seal (25).

9. Motor vehicle (12) having an internal combustion engine (15) and having an exhaust gas treatment device (16) for the purification of the exhaust gases of the internal combustion engine (15), which exhaust gas treatment device has an SCR catalytic converter (17) with which the SCR process is performed, **characterized in that** a liquid for exhaust-gas purification is fed to the SCR catalytic converter (17) by means of a pump (1) according to one of the preceding claims.

## Revendications

1. Pompe (1) pour refouler un liquide, présentant au moins un boîtier de pompe (2) avec au moins une entrée (3) et au moins une sortie (4), et avec une surface périphérique intérieure (13) et un axe géométrique (23), un excentrique (5) étant disposé à l'intérieur du boîtier de pompe (2) et l'excentrique (5) pouvant être déplacé par rapport au boîtier de pompe (2) autour de l'axe géométrique (23), un élément déformable (7) étant disposé dans un interstice de pompe (11) entre la surface périphérique intérieure (13) du boîtier de pompe (2) et une surface extérieure (6) de l'excentrique (5) et un conduit de refoulement (8) étant réalisé avec l'élément déformable (7) et la surface périphérique intérieure (13) du boîtier de pompe (2) depuis l'au moins une entrée (3) jusqu'à l'au moins une sortie (4) et en outre l'élément déformable (7) étant pressé contre le boîtier de pompe (2) depuis la surface extérieure (6) de l'excentrique (5) le long d'au moins une portion du conduit de refoulement (8) de telle sorte qu'au moins un joint d'étanchéité déplaçable (9) du conduit de refoulement (8) et au moins un volume de pompe fermé (10) soient réalisés dans le conduit de refoulement (8), lesquels peuvent être déplacés pour refouler le liquide par un déplacement excentrique de l'excentrique (5) le long du conduit de refoulement (8) depuis l'entrée (3) jusqu'à la sortie (4), un joint d'étanchéité stationnaire (25) étant prévu entre la sortie (4) et l'entrée (3), lequel empêche un reflux de liquide depuis la sortie (4) jusque dans l'entrée (3), **caractérisée en ce que** la surface périphérique intérieure (13) du boîtier de pompe (2) présente un renfoncement (26) dans la région du joint d'étanchéité stationnaire (25) et l'élément déformable (7) est tendu de manière étanche aux fluides dans la région du renfoncement (26) avec une goupille (27) au niveau de la surface périphérique intérieure (13).

2. Pompe (1) selon la revendication 1, dans laquelle la goupille (27) est disposée dans le renfoncement (26) de telle sorte que celle-ci soit située à l'extérieur d'une forme de base cylindrique (14) formée par la surface périphérique intérieure (13).

3. Pompe (1) selon l'une quelconque des revendications précédentes, dans laquelle la surface périphérique intérieure (13) présente une forme de base cylindrique (14) et le conduit de refoulement (8) est formé par la surface périphérique intérieure (13) et par une surface de conduit concave de l'élément déformable (7), l'élément déformable (7) et la surface périphérique intérieure (13) s'appliquant l'un contre l'autre dans la direction axiale (24) des deux côtés du conduit de refoulement (8) à chaque fois dans au moins un contact d'étanchéité annulaire (20).

4. Pompe (1) selon l'une quelconque des revendications précédentes, dans laquelle l'élément déformable (7) présente, des deux côtés du conduit de refoulement (8), à chaque fois une pluralité de lèvres d'étanchéité radialement périphériques (21) qui s'appliquent contre la surface périphérique intérieure (13) du boîtier de pompe (2) et qui forment le contact d'étanchéité annulaire (20).

5. Pompe (1) selon l'une quelconque des revendications précédentes, dans laquelle l'élément déformable présente, dans la région du joint d'étanchéité stationnaire (25), une pluralité de lèvres d'étanchéité (21) s'étendant parallèlement à l'axe géométrique (23), lesquelles s'appliquent dans le renfoncement (26) au niveau de la surface périphérique intérieure (13) du boîtier de pompe (2) et forment le joint d'étanchéité stationnaire (25).

6. Pompe (1) selon l'une quelconque des revendications précédentes, dans laquelle l'élément déformable (7) est disposé dans la direction axiale (24) de chaque côté de l'excentrique (5) à chaque fois entre la surface périphérique intérieure (13) et une bague de centrage (22), l'élément déformable (7) étant à chaque fois pressé par les bagues de centrage (22) contre la surface périphérique intérieure (13) du boîtier de pompe (2), de telle sorte qu'il se forme dans chaque cas un contact d'étanchéité annulaire (20).

7. Pompe (1) selon la revendication 6, dans laquelle les bagues de centrage (22) disposées de chaque côté de l'excentrique (5) présentent, dans la région du joint d'étanchéité stationnaire (25), un renflement (28) qui pénètre dans le renfoncement (26) de la surface périphérique intérieure (13) du boîtier de pompe (2).

8. Pompe (1) selon la revendication 7, dans laquelle la goupille (27) fixe les bagues de centrage (22) dans la région du joint d'étanchéité stationnaire (25).

9. Véhicule automobile (12), présentant un moteur à combustion interne (15), un dispositif de traitement de gaz d'échappement (16) pour purifier les gaz d'échappement du moteur à combustion interne (15) avec un catalyseur SCR (à réduction catalytique sélective) (17), avec lequel le procédé SCR est réalisé, **caractérisé en ce qu'**un liquide de purification des gaz d'échappement est acheminé au catalyseur SCR (17) au moyen d'une pompe (1) selon l'une quelconque des revendications précédentes.
